# EUROPEAN PATENT SPECIFICATION

(11) **EP 0 475 650 B1**
(45) Date of publication and mention of the grant of the patent: **28.07.1993**
(21) Application number: 91308021.4
(22) Date of filing: 02.09.1991
(51) Int. Cl.: B60J 7/00

(54) **Vehicle opening roof**
Sonnendach für Kraftfahrzeug
Toit solaire pour véhicule

(30) Priority: 08.09.1990 GB 9019697
(43) Date of publication of application: 18.03.1992
(73) Proprietor: Britax Weathershields Limited, Birmingham B5 7EH (GB)
(72) Inventor: Osborne, Raymond Brian, Wolverhampton, West Midlands WV7 3DE (GB); Cook, Philip, Carrington, Urmston, Manchester M31 4DD (GB)
(74) Representative: Hollinghurst, Antony

(56) References cited:
- EP-A- 0 164 532
- CHEMICAL ABSTRACTS, vol. 111, no. 8, 21 August 1989, Columbus, Ohio,US; abstract no. 627666Y, ARAI NOBUSHIGE: 'formation of thermochromic coating'

## Description

This invention relates to a vehicle opening roof comprising a frame for surrounding a roof opening, a transparent or translucent panel which is pivotable on the frame about an axis located in the vicinity of its front edge, a lifting mechanism for raising the rear edges of the panel secured to the frame adjacent to the rear edge of the opening, two roller blinds mounted on the vehicle roof so as to extend across the opening, each blind being located on a respective side of the lifting mechanism, and blocking means for obstructing passage of light through the panel between the roller blinds.

An opening roof of this type is disclosed in EP-A-0164532, wherein the blocking means takes the form of an opaque strut extending across the opening. Such a strut is visualy unattractive and requires a cut-away zone in the immediate vicinity of the lifting mechanism.

It is known to reduce the proportion of incident light transmitted through a glass sunroof panel by providing a uniform opaque pattern thereon, for example, a pattern of dots. It is also known for a small zone of such a panel to include a more completely opaque area to carry a trade mark or other designation.

According to the invention, in an opening roof of the type described above, the panel carries a pattern of opaque material, the density of the pattern being greater in the central region between the areas covered by the roller blinds than at the sides of the panel.

The term "density", as used herein, refers to the area of and spacing between adjacent opaque zones on the panel and not to the transmissivity of the opaque material.

Preferably, the density of the opaque material decreases gradually from a maximum in said central region to a minimum at said side edges.

In one form of the invention, the pattern of opaque material comprises a series of stripes extending from one side of the panel to the other, the width of each stripe being greater at its centre than at either end.

In another form of the invention, the pattern of opaque material comprises an array of dots, the area of each dot being greatest in the central region and decreasing to each side of the panel.

With either of the above variants of the invention, the panel may include a completely opaque central zone.

Embodiments of the invention will now be described, by way of example, with reference to the accompanying drawings, in which:
Figure 1 is a perspective view of the top of a motor car having an opening roof in accordance with the invention;
Figure 2 is a plan view from below (i.e., from within the vehicle), of an opening roof in accordance with the invention, with the closure means removed;
Figure 3 is a plan view from below of a glass panel for use with the opening roof bearing a pattern of opaque material in accordance with the invention;
Figure 4 is a plan view, similar to Figure 3, of the front part of a panel bearing an alternative pattern of opaque material; and
Figure 5 is a plan view of the rear part of a panel bearing yet another pattern of opaque material.

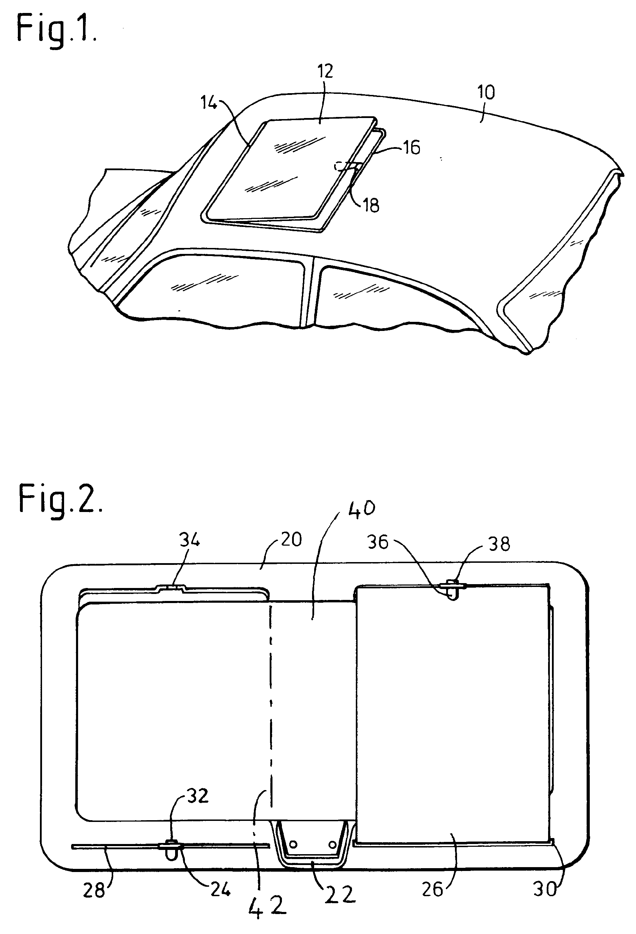

Referring to Figure 1, a roof 10 of a motor vehicle has an opening which is filled by a glass panel 12 which is hinged along its leading edge 14 to a frame 16 which bounds the opening. An opening mechanism 18 at the rear of the panel 12 is arranged to hold the panel 12 in a fully opened position, as illustrated, or in a fully closed position in which the panel 12 is level with the vehicle roof 10.

Figure 2 shows a trim ring 20 which is secured to the underside of the frame 16 and which includes an integral shroud 22 for surrounding a handle (not shown) of the opening mechanism 18. Two flexible fabric roller blinds 24 and 26 are mounted on rollers which are concealed behind the trim ring 20, the two blinds being protractable through respective slots 28 and 30. The blind 24 is shown in the fully retracted position in which a catch 32 prevents its free end from being withdrawn completely through the slot 28. On the opposite side of the opening, the trim ring 20 has a slot 34 in which the catch 32 can engage when the roller blind 24 is deployed. The roller blind 26 is shown in the deployed position with its catch 36 engaging in a slot 38 in the trim ring 20.

Even when both roller blinds are deployed, a gap 40 is left between the roller blind 26 and the adjacent edge of the roller blind 24 (represented by a chain-dotted line 42).

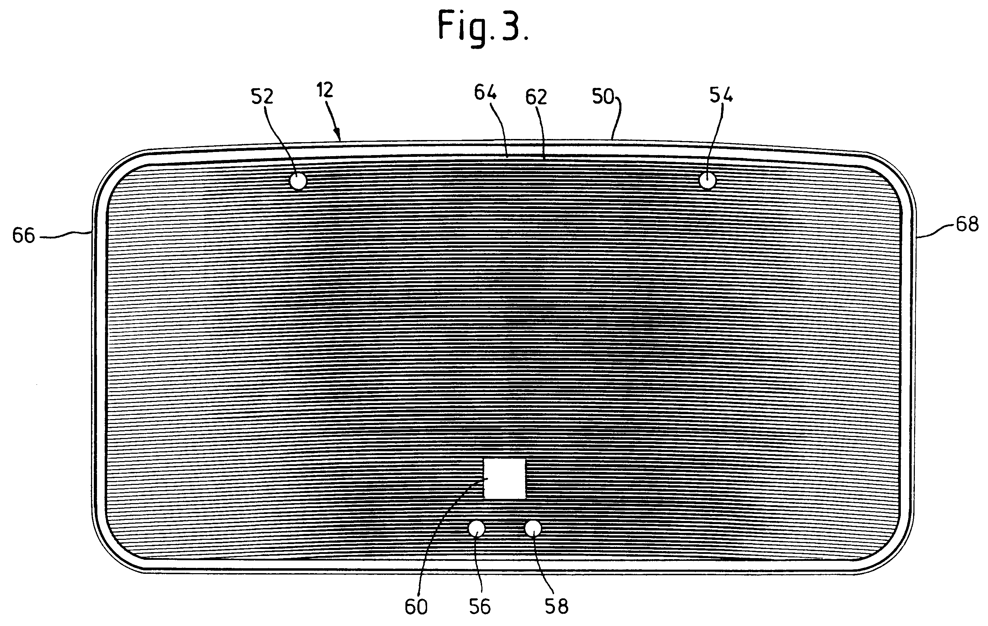

Figure 3 is a plan view of the panel 12. An opaque pattern is applied to the panel with a black pigment. The pattern includes a solid black peripheral stripe 50, covering the region where the panel 12 engages with a seal (not shown) carried by the frame 16, four circular zones 52, 54, 56 and 58 to indicate where holes should be drilled for attachment of the hinges and the opening mechanism 18, and a square zone 60 for a trademark or other logo. In accordance with the invention, the rest of the panel is covered by a series of transversely extending stripes such as the stripe 62 which extends across the whole width of the front edge of the panel. Each stripe has a region 64 of maximum width at the centre of the panel and tapers towards each of the side edges 66 and 68. Consequently, the proportion of the light which is transmitted through the centre of the panel (which cannot be covered by either of the roller blinds 26 and 28) is substantially less than that which is transmitted by the side regions.

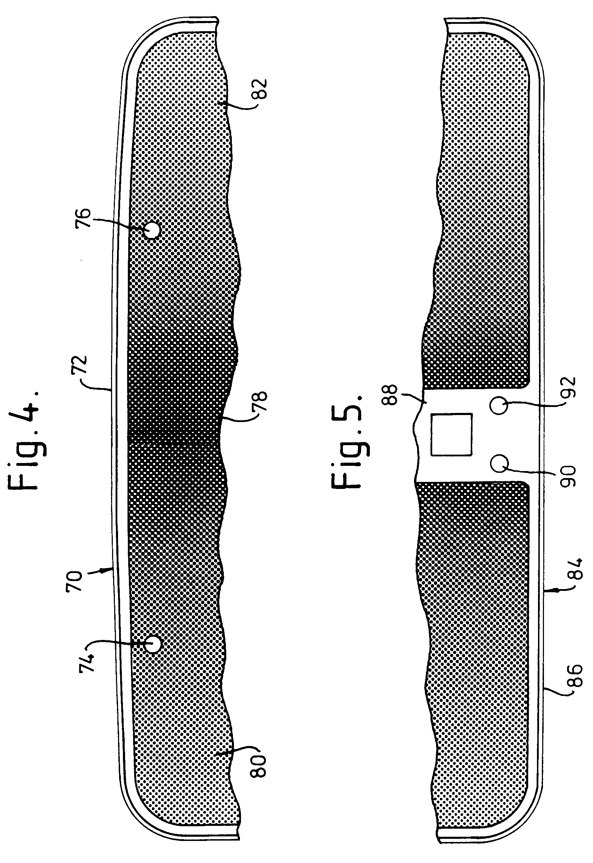

Figure 4 illustrates the front of an alternative panel 70 which has a peripheral stripe 72 and markings 74 and 76 for drilling holes for the hinges. The transverse stripes 62 of Figure 3 are replaced by a uniformly distributed pattern of dots, the dots in the central region 78 being of larger diameter than the dots in either of the side regions 80 and 82.

Figure 5 illustrates the rear part of a panel 84 which is a modification of the panel 70 shown in Figure 4. The panel 84 has a solid black peripheral stripe 86. The principal difference from the panel 70 is that it has a central solid black region 88 extending across the panel from the rear edge in the vicinity of the fixing locations 90 and 92 for the opening mechanism 18. On each side of the region 88, there is a pattern formed by an array of dots which is identical with the pattern on the corresponding parts of the panel 70 shown in Figure 4.

The invention accordingly provides for reduced light transmission through the part of the panel of the sunroof which cannot conveniently be covered by the roller blinds 26 and 28 without causing an excessive reduction in the overall amount of light transmitted through the panel when the blinds are open.

## Claims

1. A vehicle opening roof comprising a frame (16) for surrounding a roof opening, a transparent or translucent panel (12) which is pivotable on the frame (16) about an axis located in the vicinity of its front edge (14), a lifting mechanism (18) for raising the rear edges of the panel secured to the frame (16) adjacent to the rear edge of the opening, two roller blinds (24, 26) mounted on the frame (16) so as to extend across the opening, each blind (24, 26) being located on a respective side of the lifting mechanism (18), and blocking means for obstructing passage of light through the panel (12) between the roller blinds (24, 26), characterised in that the panel (12) carries a pattern of opaque material (62, 78, 80, 82), the density of the pattern being greater in the central region between the areas covered by the roller blinds (24, 26) than at the sides of the panel (12).

2. A vehicle opening roof according to claim 1, wherein the density of the opaque material (62, 78, 80, 82) decreases gradually from a maximum in said central region to a minimum at said side edges.

3. A vehicle opening roof according to claim 1 or 2, wherein the pattern of opaque material comprises a series of stripes (62) extending from one side of the panel (12) to the other, the width of each stripe (62) being greater at its centre than at either end.

4. A vehicle opening roof according to claim 1 or 2, wherein the pattern of opaque material comprises an array of dots (78, 80, 82), the area of each dot being greatest in the central region (78) and decreasing to each side of the panel (12).

5. A vehicle opening roof according to claim 4, wherein the panel (12) includes a completely opaque central zone (88).

## Patentansprüche

1. Bewegliches Kraftfahrzeug-Dach (oder Sonnendach) mit einem Rahmen (16) zum Umgeben einer Dachöffnung, einer lichtdurchlässigen oder durchscheinenden Platte (12), die an dem Rahmen (16) um eine in der Nähe dessen vorderseitigen Kante (14) angeordnete Achse verschwenkbar ist, einem mit dem Rahmen (16) angrenzend an die der rückwärtige Kante der Öffnung befestigten Anhebe-Mechanismus (18) zum Anheben der rückwärtigen Kanten der Platte, zwei Roll-Jalousien (24, 26), die in der Weise an dem Rahmen (16) angebracht sind, daß sie sich quer über die Öffnung erstrecken, wobei jede Jalousie (24, 26) an einer jeweiligen Seite des Anhebe-Mechanismus (18) angeordnet ist, und mit Blockierungsmitteln zum Versperren des Lichtdurchganges durch die Platte (12) zwischen den Roll-Jalousien (24, 26), **dadurch gekennzeichnet,**
daß die Platte (12) ein Muster aus einem lichtundurchlässigen Material (62, 78, 80, 82) trägt, wobei die Dichte des Musters in dem mittleren Bereich zwischen den durch die Roll-Jalousien (24, 26) abgedeckten Bereichen größer als an den Seiten der Platte (12) ist.

2. Bewegliches Kraftfahrzeug-Dach nach Anspruch 1, bei welchem die Dichte des lichtundurchlässigen Materials (62, 78, 80, 82) allmählich von einem Maximum in dem genannten mittleren Bereich bis zu einem Minimum an den genannten Seitenkanten abnimmt.

3. Bewegliches Kraftfahrzeugdach nach Anspruch 1 oder 2, bei welchem das Muster aus lichtundurchlässigem Material eine Reihe von Streifen (62) aufweist, die sich von der einen Seite der Platte (12) zu der anderen hin erstrecken, wobei die Breite eines jeden Streifens (62) in seiner Mitte größer als an seinem jeden Ende ist.

4. Bewegliches Kraftfahrzeug-Dach nach Anspruch 1 und 2, bei welchem das Muster aus lichtundurchlässigem Material eine regelmässige Anordnung oder Gruppierung von Punkten (78, 80, 82) aufweist, wobei der Bereich eines jeden Punktes in der mittleren Region (78) am größten ist und zu einer jeden Seite der Platte (12) hin kleiner wird.

5. Bewegliches Kraftfahrzeug-Dach nach Anspruch 4, bei welchem das Dach (12) eine Vollständig lichtundurchlässige mittlere Zone (88) aufweist.

## Revendications

1. Un toit ouvrant pour véhicule comprenant un châssis (16) entourant une ouverture de toit, un panneau transparent ou translucide (12) pivotant sur le châssis (16) autour d'un axe situé à proximité de son bord avant (14), un mécanisme de levage (18) pour lever les bords arrière du panneau, fixé sur le châssis (16) contigu au bord arrière de l'ouverture, deux stores roulants (24, 26), montés sur le châssis (16) de manière à s'étendre en travers de l'ouverture , chaque store (24, 26) étant situé sur un côté respectif du mécanisme de levage (18) et un pare-soleil empêchant le passage de la lumière à travers le panneau (12) entre les stores roulants (24, 26), caractérisé en ce que le panneau (12) comprend un motif en matériau opaque (62, 78, 80, 82), la densité du motif étant plus grande dans la partie centrale, entre les zones recouvertes par les stores roulants (24, 26), que sur les côtés du panneau (12).

2. Un toit ouvrant pour véhicule selon la revendication 1, dans lequel la densité du matériau opaque (62, 78, 80, 82) baisse progressivement à partir d'un maximum dans ladite partie centrale, jusqu'à un minimum sur lesdits bords latéraux.

3. Un toit ouvrant pour véhicule selon la revendication 1 ou 2, dans lequel le motif en matériau opaque comprend une série de bandes (62) s'étendant d'un côté du panneau (12) à l'autre, la largeur de chaque bande (62) étant plus grande en son centre qu'à l'une ou l'autre extrémité.

4. Un toit ouvrant pour véhicule selon la revendication 1 ou 2, dans lequel le motif en matériau opaque comprend un réseau de points (78, 80, 82), la surface de chaque point étant plus grande dans la partie centrale (78) et allant en décroissant de chaque côté du panneau (12).

5. Un toit ouvrant pour véhicule selon la revendication 4, dans lequel le panneau (12) comprend une zone centrale totalement opaque (88).
